(19) Europäisches Patentamt

European Patent Office

Office européen des brevets

(11) EP 0 683 973 B1

# (12) EUROPEAN PATENT SPECIFICATION

(45) Date of publication and mention
of the grant of the patent:
**07.01.1999 Bulletin 1999/01**

(21) Application number: **95902921.6**

(22) Date of filing: **08.12.1994**

(51) Int. Cl.[6]: **A01G 25/06**, A01G 7/00,
A01G 29/00

(86) International application number:
**PCT/JP94/02058**

(87) International publication number:
**WO 95/15677 (15.06.1995 Gazette 1995/25)**

(54) **SOIL IRRIGATION PIPE, SOIL IRRIGATION METHOD USING THE SAME PIPE, AND METHOD OF SUPPLYING GAS INTO SOIL**

ROHR ZUM BEWÄSSERN VON ERDBODEN, VERFAHREN ZUR BEWÄSSERN VON ERDBODEN MIT DIESEM ROHR UND VERFAHREN ZUM ERNÄHREN VON ERDBODEN MIT GAS

CONDUIT D'IRRIGATION DE SOL, PROCEDE D'IRRIGATION DE SOL AU MOYEN DUDIT CONDUIT ET PROCEDE D'ALIMENTATION DU SOL EN GAZ

(84) Designated Contracting States:
**ES FR GB IT**

(30) Priority: **10.12.1993 JP 310928/93**
**10.12.1993 JP 310929/93**
**10.12.1993 JP 310930/93**

(43) Date of publication of application:
**29.11.1995 Bulletin 1995/48**

(73) Proprietor:
**NIPPON SANSO CORPORATION**
**Tokyo 105 (JP)**

(72) Inventors:
• **TANIGUCHI, Masayuki,**
**Nippon Sanso Corporation**
**Tokyo 105 (JP)**

• **KAWAGUCHI, Haruo,**
**Nippon Sanso Corporation**
**Tokyo 105 (JP)**

(74) Representative:
**Vuillermoz, Bruno et al**
**Cabinet Laurent & Charras**
**B.P. 32**
**20, rue Louis Chirpaz**
**69131 Ecully Cédex (FR)**

(56) References cited:
**EP-A- 0 462 038**    **JP-A- 5 015 255**
**JP-A-52 006 623**    **JP-Y- 4 025 957**
**US-A- 4 235 561**

**Description**

Technical Field

The present invention relates to a pipe for subsurface irrigation, a subsurface irrigation method using this pipe, and a method for supplying gas into soil using this pipe. In particular, the present invention relates to a pipe for subsurface irrigation to be used in the field of agricultural industry for directly and uniformly dispersing liquid such as irrigation water, liquid fertilizer, liquid pesticide or the like, or gas such as air, oxygen, carbon dioxide, fumigant, or the like, in an efficient manner, over a wide area; and relates to a subsurface irrigation method using this pipe and to a method for supplying gas into soil using this pipe.

Background Art

Conventionally, in the agricultural industry, methods for irrigation have been conducted generally in such a manner that water is supplied from the surface of the ground by flooding or by means of sprinklers, watering tubes, drip tubes or the like. However, these methods have had difficulty in precise control over the uniformity of the irrigation water amount, fertilizer amount, and chemical amount. Furthermore, these methods have had problems in that immediate evaporation of a large amount of the water from the surface may result in an insufficient irrigation, that liquid fertilizer may be washed away along a depression on the surface of the ground, and that damage to the leaves of crops or the like may occur due to phytotoxicity of pesticide for use in soil which is adhered thereto. In addition, there are also cases in which oxygen deficiency arises in soil due to the creation of a water barrier on the surface by the water.

In addition, as methods for supplying air into soil, methods which break down the surface layer, such as plowing or the like, have been conventionally employed. However, during cultivation, since complete plowing of the entire surface cannot be conducted, even in the case when oxygen deficiency is confirmed, only insufficient countermeasures are possible, such as plowing along the periphery in a manner such that the roots are not damaged. Furthermore, when attempting to employ pesticides capable of fumigation in soil, or when attempting to disperse carbon dioxide gas in soil, up to now, methods displaying extremely poor efficiencies were employed, such as a method in which holes were opened in the field surface at fixed intervals, following which the gas or liquid was injected in small amounts through each hole.

In order to solve the aforementioned problems, methods were proposed in which a perforated tubing formed by means of providing punch apertures at fixed intervals in the tubing wall which was manufactured from rubber, plastic, ceramic, or the like, was buried in soil, and the required amount of water, liquid fertilizer, oxygen, and the like was supplied directly into the soil via these aforementioned apertures. However, although various methods for manufacturing porous tubings for irrigation were proposed, detail examinations with regard to the coefficients of permeability and the flow rates of fluids appropriate for subsurface irrigation, as well as the interdependent relationship of the aforementioned were not conducted. In particular, physical properties and application methods of practical pipes for water irrigation by means of which both liquid and gas could be uniformly supplied in a controlled manner to a predetermined area of soil remained unknown.

Disclosure of Invention

Consequently, it is a first object of the present invention to provide a pipe for subsurface irrigation for supplying fluid over a wide area in a uniform and efficient manner in order to create an ideal soil environment for raising crops, i.e., in a manner such that the water content, fertilizer, pesticide, oxygen, or the like contained in the soil is adjusted in an ideal manner.

In addition, it is a second object of the present invention to provide a subsurface irrigation method for supplying water, fertilizer, pesticide, or the like into soil over a wide area in a uniform and efficient manner in order to prepare an ideal soil environment for raising crops.

Furthermore, it is a third object of the present invention to provide a method for efficiently supplying gas into soil without breaking down the soil structure.

The aforementioned first object is achieved by means of supplying a pipe for subsurface irrigation which is formed from a flexible, porous tubing possessing a coefficient of water permeability of $1 \times 10^{-8} \sim 1.5 \times 10^{-5}$ cm/s. This pipe for subsurface irrigation preferably has an inner diameter of $7 \sim 20$ mm. In addition, this pipe for subsurface irrigation preferably displays a thickness of $1.5 \sim 3$ mm.

The aforementioned second object is achieved by means of providing a subsurface irrigation method in which a flexible porous tubing possessing a coefficient of water permeability in the range of $4.5 \times 10^{-7} \sim 1.5 \times 10^{-5}$ cm/s is buried in soil, and liquid is supplied into the soil using this tubing at a liquid supply rate of not greater than 0.5 $cm^3/s \cdot m$ and under a pressure, represented by water head, of not greater than 20 m. In this aforementioned subsurface irrigation method, the liquid supply rate is preferably not greater than 0.15 cm³/s·m. In addition, in this subsurface irrigation method, the conditions "at a liquid supply rate of not greater than 0.5 cm³/s·m and under a pressure, represented by water head, of not greater than 20 m" can be achieved by means of utilizing a flow regulating valve. The longitudinal extended length of the aforementioned porous tubing is preferably not greater than 100 m when liquid is supplied from one end therein; this longitudinal extended length is preferably not greater than 200 m when liquid is supplied from both ends therein.

The aforementioned third object is achieved by means of providing a method for supplying gas into soil in which a flexible, porous tubing possessing a coefficient of water permeability within the range of $1.0 \times 10^{-8} \sim 1.0 \times 10^{-5}$ cm/s is buried in soil and employed in the supply of gas into the soil. In this method for supplying gas into the soil, it is preferable to supply water from the porous tubing to the soil around the periphery therein, before supplying the gas. In addition, in this aforementioned method for supplying gas into soil, the supply flow rate of the gas is preferably 7 cm³/s·m or less. Furthermore, in the aforementioned methods for supplying gas, a porous tubing possessing a longitudinal extended length of not greater than 50 m is preferably employed.

The porous tubing of the present invention is a tubing which has fine continuous pores possessing pore diameters of several tens of micrometers to several hundred micrometers formed in the tubing wall and the void ratio of which is approximately $15 \sim 40\%$. Thus, the porous tubing of the present invention differs from a tubing provided with punch apertures at fixed intervals in the tubing wall.

In addition, the coefficient of water permeability is experimentally calculated according to the following Formula (I).

$$K = QL / AH \qquad\qquad (I)$$

In the formula, K is the coefficient of water permeability (cm/s) of the porous tubing. Q is the supply rate of the water, i.e., the amount of water exuded per second from the fine continuous pores of the tubing wall per 1 m of this porous tubing (cm³/s·m).

L is the thickness (cm) of the porous tubing.

A is the surface area (cm²/m) per 1 m of the porous tubing.

H is the pressure represented by water head (cm) within the aforementioned porous tubing.

Furthermore, with regard to the use of a porous tubing for sending gas, it is desirable to use the coefficient of permeability of the gas ($K_g$) as an intrinsic characteristic of the porous tubing; however, since this coefficient of permeability of the gas ($K_g$) is far greater than the coefficient of water permeability (K) employed above, and since this coefficient of permeability of the gas ($K_g$) when compared with the aforementioned coefficient of water permeability (K) is largely affected by changes in factors such as the water content, humidity, temperature, and the like of the measured environment, even when sending gas, this situation is preferably handled by means of using the aforementioned coefficient of water permeability (K); hence, this coefficient of water permeability (K) is employed in the present invention.

In the following, the actions of the present invention will be explained.

The movement of water in soil is governed by gravity and capillary action. In other words, water may be divided into two categories: in the first category, water moves to the deep sections of the soil via spaces therein by gravity (this is referred to hereinafter as "gravity water"); and in the second category, water moves in the upward/downward and horizontal directions as a result of capillary action from the contact surfaces of the soil particles (hereinafter referred to as "capillary water").

Efficient irrigation of soil can be accomplished by means of drastically reducing the gravity water flowing away into the deep sections of the soil and keeping the movement of the capillary water, as much as possible in a uniform manner over a wide area of the soil. In addition, the movement distance and speed of the capillary water in the soil depends on the capillary conditions on the contact surfaces of the soil particles, and the amount of water incorporated into the soil. Consequently, even when a large amount of water is supplied at once, the excess water supplied is either lost as gravity water, or lost from overflow at the surface without an increase in the movement speed from capillary action. In addition, when the supply rate of the water is too low, gravity water is reduced, resulting in an insufficient amount of irrigation. Therefore, the most efficient and economical subsurface irrigation can be achieved when the exudation rate of the water from the porous tubing, i.e., the supply rate of the water, nearly equals the movement speed of the capillary water in the soil.

The supply rate of the water from the porous tubing is expressed with regard to Q in Formula (I) by means of Formula (II) below.

$$Q = K(AH/L) \qquad\qquad (II)$$

In other words, the supply rate Q of the water from the aforementioned porous tubing varies according to the coefficient of water permeability K of the porous tubing when the surface area A, thickness L, and pressure represented by water head H of the porous tubing are constant. In this manner, it was confirmed that according to the pipe for subsurface irrigation of the present invention possessing a coefficient of water permeability of K of $1.0 \times 10^{-8} \sim 1.0 \times 10^{-5}$ cm/s, it was possible to achieve an ideal balance between the supply rate of the water from the aforementioned porous tubing and the movement speed of the capillary water in the soil.

In addition, the supply rate Q of the water from the porous tubing varies according to the pressure represented by water head H of the porous tubing when the coefficient of water permeability K, surface area A, and thickness L of the porous tubing are constant. Consequently, according to the subsurface irrigation method of the present invention which utilizes a porous tubing possessing a coefficient of water permeability K of $4.5 \times 10^{-7} \sim 1.5 \times 10^{-5}$ cm/s, it is possible to obtain an ideal balance between the water supply amount from the aforementioned porous tubing and the movement speed of the capillary water in the soil when the liquid supply rate is not greater than 0.5 cm$^3$/s • m, and the pressure, represented by water head, of the interior of the tubing is not greater than 20 m. According to this method, liquid can be supplied into the soil uniformly over the entire length of the tubing, i.e., up to 100 m in the case when the liquid is supplied from one end of the porous tubing, and up to 200 m in the case when the liquid is supplied from both ends of the porous tubing.

On the other hand, movement of the gas in soil may be divided into several categories: diffusion of the gas to the atmosphere from the surface due to buoyancy therein; dispersion via the contact surfaces of the soil particles; and fixing of the gas due to adsorption or absorption by the soil particles or moisture therein.

In order to uniformly disperse, as much as possible, gas into soil over a wide area, it is preferable to cover the soil surface by means of mulching or the like, and conduct, as much as possible, continuous and uniform supply of the gas without supplying the gas at points. The above-mentioned porous tubing possesses fine continuous pores over the entire tubing wall, and thus, instead of injecting at points according to the conventional art, supply can be conducted along a continuous line.

When conducting the above, by pre-supplying water from the porous tubing into the soil surrounding the porous tubing, the water within the fine continuous pores and the soil particles creates a permeation resistance, and thus collective leakage of a large amount of the gas from the vicinity of the gas supply source of the porous tubing can be prevented.

When the supply flow rate of the gas is not greater than 7 cm$^3$/s • m, it is possible to conduct uniform supply of the gas up until the end of the tubing. According to these aforementioned methods, uniform gas dispersion to the soil can be achieved over the entire length of the porous tubing, i.e., up to 50 m in the case when gas is supplied to the interior of the porous tubing from one end therein, and 100 m in the case when gas is supplied from both ends therein.

According to the present invention, the following effects are obtained.

The pipe for subsurface irrigation of the present invention is formed from a flexible porous tubing possessing a coefficient of water permeability of $1.0 \times 10^{-8} \sim 1.0 \times 10^{-5}$ cm/s. Thus, a balance is achieved between the supply rate of the fluid from the porous tubing and the permeation rate of the capillary water in the soil; hence, it is possible to achieve a uniform and efficient dispersion of the fluid in the soil over the entire length of the porous tubing in an economical manner, over a wide area.

When the inner diameter of the aforementioned porous tubing is 7 ~ 20 mm, it is possible to actually disperse a sufficient amount of the fluid in the soil, resulting in numerous advantages such as a simple handling, and a reduction of the manufacturing and facility costs.

In addition, the aforementioned porous tubing with the thickness of 1.5 ~ 3 mm has sufficient resistance to internal pressure and exterernal shock.

The pipe for subsurface irrigation according to the present invention possesses the aforementioned characteristics, and thus by burying this pipe at an appropriate position in a field, the supply of irrigation water, fertilizer, pesticide, air, or the like can be conducted as necessary, in an efficient manner, using a single installation by means of simply switching the supply sources, thereby reducing the operations necessary therefor. Moreover, it is possible to precisely and uniformly control the aforementioned supply amounts over the entire field area. In addition, since the supply rate of the fluid is regulated at a low flow rate in order to balance the capillary strength of the soil, excessive pressure for supplying the fluid is unnecessary; thus, investment in the equipment such as pumps and piping can be minimized, and an economic efficiency is achieved.

The pipe for subsurface irrigation according to the present invention is not just restricted to the agricultural industry as it may also be applied to, for example, injecting a wetting agent, a soil hardening agent, a soil modifying agent, or the like in landscaping, sports turf, and the like.

According to the subsurface irrigation method of the present invention, liquid is supplied into soil under the conditions of a liquid supply rate of not greater than 0.5 cm$^3$/s • m and a pressure, represented by water head, of not greater than 20 m, by using a flexible porous tubing possessing a coefficient of water permeability of $4.5 \times 10^{-7} \sim 1.5 \times 10^{-5}$ cm/s which is buried in the soil. Thus, irrigation water, liquid fertilizer, liquid pesticide, or the like can be directly supplied into the soil in a uniform manner and encompassing a wide area without unnecessary loss, over the entire length of the porous tubing, i.e., up to 100 m in the case when supplying the liquid from one end, and up to 200 m in the case when supplying the liquid from both ends therein.

It is possible to simultaneously set the aforementioned conditions, i.e., a liquid supply rate of not greater than 0.5 $cm^3/s \cdot m$ and a pressure, represented by water head, of not greater than 20 m, by means of using a flow regulating valve.

This subsurface irrigation method according to the present invention is not just restricted to the agricultural industry as it may also be applied to, for example, injecting a wetting agent, a soil hardening agent, a soil modifying agent, or the like in landscaping, sports turf, and the like.

According to the method for supplying gas into soil of the present invention, gas is supplied into soil by means of a flexible, porous tubing possessing a coefficient of water permeability of $1.0 \times 10^{-8} \sim 1.0 \times 10^{-5}$ cm/s which is buried in the soil. Thus, gas such as air, carbon dioxide gas, fumigation pesticide, or the like can be directly and uniformly supplied and dispersed in soil in an efficient manner over a wide area.

When conducting the above, by pre-supplying water from the porous tubing into the soil surrounding the porous tubing, the water within the fine continuous pores and the soil particles creates a permeation resistance, and thus collective leakage of a large amount of the gas from the vicinity of the gas supply source of the porous tubing can be prevented, which in turn is effective in uniformly supplying and dispersing the gas over a wide area.

When the supply flow rate of gas is not greater than 7 $cm^3/s \cdot m$, the permeation resistance of the gas passing through the fine continuous pores, and the dispersion rate of the gas in the soil are in an approximate balance, and thus the gas can be uniformly dispersed over the length of the tubing (i.e., until the end of the tubing). When employing a porous tubing according to the aforementioned conditions, uniform gas dispersion can be achieved over the length of the porous tubing, i.e., up to 50 m in the case when gas is supplied from one end therein, and up to 100 m in the case when gas is supplied from both ends therein.

According to the method for supplying gas into soil of the present invention, by burying this pipe at an appropriate position in a field, the supply of irrigation water, fertilizer, pesticide, air and the like can be conducted as necessary, in an efficient manner, using a single installation by means of simply switching the supply sources, thereby reducing the operations necessary therefor. Moreover, it is possible to precisely and uniformly control the aforementioned supply amounts over the entire field area. In addition, since this method is conducted with a low flow rate, excessive pressure for supplying the gas is unnecessary; thus, investment in equipment such as pumps and piping can be minimized, and an economic efficiency is achieved.

This gas supply method to the soil according to the present invention is not just restricted to the agricultural industry as it may also be applied to landscaping, sports turf, and the like.

Brief Description of Drawings

Fig. 1 is a plane view showing a pipe for subsurface irrigation according to an embodiment of the present invention.
Fig. 2 is a plane view showing a pipe for subsurface irrigation according to another embodiment of the present invention.
Fig. 3 is a plane view showing a pipe for subsurface irrigation according to another embodiment of the present invention.

Best Mode for Carrying out the Invention

In the following, the present invention will be explained in detail with referenced to the Figures.

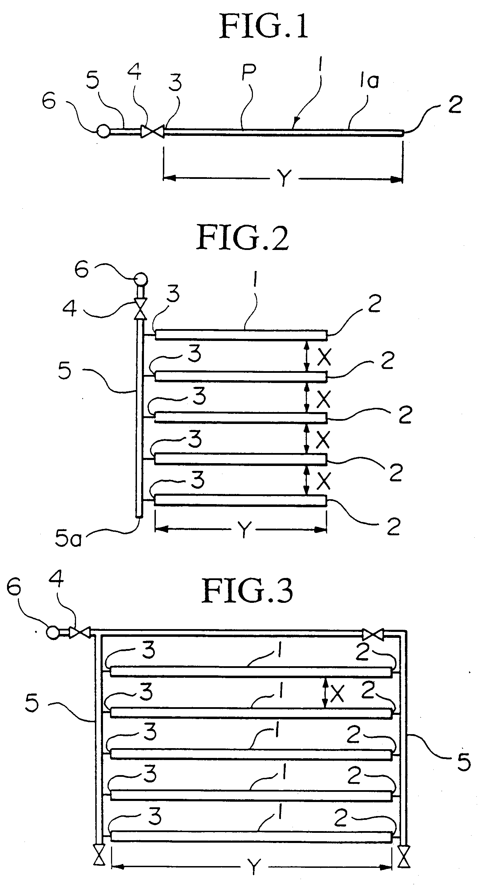

In Fig. 1, a porous tubing 1 to be used in the pipe for subsurface irrigation of the present invention is preferably formed using a flexible raw material, for example, rubber, plastic such as polyvinyl chloride, polyethylene, or the like, or a composite material of the same. In particular, a porous tubing formed using rubber powder with polyethylene or the like as the bonding material is preferred. This flexible porous tubing 1 possesses fine continuous pores p in the tubing wall 1a.

This porous tubing 1 is employed by being buried in soil, and hence is normally in contact with the ion components of the soil and water. Thus, flexible and anti-corrosive properties are particularly preferable; in contrast, ceramic, steel, and the like are inappropriate as raw materials from the viewpoint of damage, corrosion, weight, and the like.

The pore diameter of the fine continuous pores p is on the average several tens of micrometers to a few hundreds of micrometers, with a preferable void ratio of approximately $15 \sim 40\%$. In the case when the average pore diameter is less than several tens of micrometers, the coefficient of water permeability becomes too small, thereby lowering the irrigation efficiency and the supply efficiency of the gas. In addition, blockage occurs easily due to the suspended matter in the supply fluid. On the other hand, when the average pore diameter exceeds a few hundred micrometers, the coefficient of water permeability becomes too large, and a large amount of the fluid flows out from the vicinity of the fluid supply source. As a result, the uniform supply of the fluid over the entire length of the porous tubing 1 is not possible. In addition, in the case when the void ratio is less than 15%, the permeation resistance becomes large, which in turn necessitates an excessive amount of pressure. On the other hand, when this void ratio exceeds approximately 40%, the tubing body is weakened, and the permeation becomes too large, both of which are impractical.

The inner diameter of the porous tubing 1 is preferably 7 ~ 20 mm. In the case when this inner diameter is less than 7 mm, the surface area A per 1 m of the porous tubing 1 in Formula (II) becomes too small, and the uniformity of the exudation amount of water is lost along the longitudinal direction; in the case when supplying gas, the permeation amount along the longitudinal direction becomes non-uniform, thereby leading to insufficient gas dispersion in the soil. As a result of both the aforementioned, tubings with small diameters are insufficient in practical use in a field. In addition, when the aforementioned inner diameter exceeds 20 mm, although there are no problems with regard to the supply amount of the fluid, the use becomes quite inconvenient with respect to managing transportation, movement, burying, and the like, and increases the scale of the facility and the raw materials, resulting in excessive installation costs and expenditures.

The thickness of the tubing wall 1a of the aforementioned porous tubing 1 is preferably within the range of 1.5 ~ 3 mm. In the case when the thickness is less than 1.5 mm, the resistance to the internal pressure of the tubing, external pressure, as well as external shock is reduced, while in the case when this thickness exceeds 3 mm, the thickness L of Formula (II) becomes too large and the supply rate Q is lowered, thereby leading to excessive manufacturing costs for the porous tubing 1.

Since this porous tubing 1 may be handled in a very rough manner during and after burying, it requires a certain degree of strength. For example, the porous tubing preferably possesses a tensile strength (JIS K6301, ASTM D-410) of approximately 200 psi (approximately 15 kg/cm$^2$) or greater.

In addition, the aforementioned porous tubing 1 is for use in a field, and thus, for example, if pores possessing pore diameters of greater than a few hundred micrometers are exposed on the surface therein, it is possible to incur damage from penetration of the roots of plants into pores. Consequently, it is preferable to finish the surface of the tubing wall 1a in a manner such that these types of excessively large pores do not exist.

Such porous tubings 1 are normally assembled into a pipe for subsurface irrigation possessing an appropriate length and shape by connecting the ends of the aforementioned tubing bodies according to the dimensions and shape of the field at the field site. It is possible for the pipe for subsurface irrigation assembled in this manner to be bent or branched by means of the connecting portions. According to the shape of the field as well as economic factors, it is possible to construct the pipe for subsurface irrigation according to the present invention by including normal piping in the medium of porous tubings 1 so as to control the uniformity of supply of gas and/or liquid for the entire structure.

As shown in Fig. 1, the pipe for subsurface irrigation of the present invention can be constructed by plugging one end 2 of a porous tubing 1, and then connecting the other end 3 to a fluid supply source 6 via a header tubing 5 for use in fluid supply.

In addition, for example, as shown in Fig. 2, a preferred concrete example of the pipe for subsurface irrigation of the present invention is provided, which is assembled by means of arranging a plurality of porous tubings 1 in a parallel manner at fixed intervals, and then connecting the other end 3 of each tubing to a header tubing 5 for use in fluid supply to form a comb-shaped structure. In this example, one end 5a of this header tubing for use in fluid supply is sealed, while the other end is connected to a fluid supply source 6. In the case when utilizing a plurality of porous tubings 1 arranged in a parallel manner, it is possible to vary the intervals X thereinbetween according to the capillary strength of the soil; however, it is preferable to set these intervals to within a normal range of 30 ~ 150 cm.

Furthermore, Fig. 3 also shows a preferred example of the pipe for subsurface irrigation of the present invention which is assembled by means of arranging header tubings 5 for uses in fluid supply at both ends 2 and 3 of each porous tubing 1.

In each of the aforementioned Figures, reference number 4 indicates a flow regulating valve .

In the present invention, it is possible to extend the length Y of the porous tubing 1, to be buried and used in soil in a field, to approximately 100 m in the case when supplying fluid from one end therein. When a tubing with a length of 100 m is placed horizontally on the surface, a large amount of exudation is observed from fine pores p near the fluid supply source 6. This exudation amount becomes non-uniform along the longitudinal direction, and thus the fluid eventually is not able to proceed to the end of the tubing. However, in the soil, when the soil is dry, the fluid is attracted by the negative pressure (suction force) created by the capillary action of the soil particles; on the other hand, when the soil is wet, depending on the degree of dampness, the aforementioned negative pressure is reduced and may be completely eliminated in the case when the soil is saturated with water. In this manner, as a result of automatically controlling the gradual exudation amount from the portion close to the fluid supply source 6 of the porous tubing 1 which is headed toward the end portion therein, uniform supply of fluid can be conducted over the entire length of a porous tubing 1 exceeding 100 m.

In addition, it is possible to extend the length L of a porous tubing 1, to be buried and used in soil in a field according to the present invention, to 50 m in the case when gas is supplied from one end 3 therein. In the case of a tubing length Y of 50 m placed horizontally on the surface of the field, the gas to be supplied leaks and is lost from fine pores p near the gas supply source 6 in large amounts, and the permeation amount along the longitudinal direction becomes non-uniform. However, when placed in the soil, due to the permeation resistance created by the soil particles and soil water content, it is possible to achieve a uniform permeation up until the far end 2 of the porous tubing.

Furthermore, as shown in Fig. 3, when supplying liquid and/or gas from both ends of each porous tubing 1 by arranging header tubings 5 for use in fluid supply at both ends 2 and 3, it is possible to extend the length Y of a porous tubing 1 to twice that used in supplying liquid and/or gas from one end as described above.

In the following, the methods for supplying fluid into soil using the aforementioned porous tubing 1 will be explained according to the embodiments of the present invention.

The porous tubing 1 of the present invention is buried in soil, for example, by placing this porous tubing 1 in a trench which is dug into a field site at a fixed depth, and then covered with soil.

According to the subsurface irrigation method of the present invention, a flexible porous tubing 1 possessing a coefficient of water permeability of $4.5 \times 10^{-7} \sim 1.5 \times 10^{-5}$ cm/s is buried and used in soil.

In addition, according to the method for supplying gas into soil of the present invention, a flexible porous tubing 1 possessing a coefficient of water permeability of $1.0 \times 10^{-8} \sim 1.0 \times 10^{-5}$ cm/s is buried and used in soil.

In the case when the pipe for subsurface irrigation shown in Fig. 1 is employed in the subsurface irrigation method or gas supply method to soil according to the present invention, the fluid discharged from a fluid supply source 6 is introduced into a porous tubing 1 from one end 3 of the porous tubing 1 via a header tubing 5 for use in fluid supply and a flow regulating valve 4, and then supplied into the soil via fine continuous pores p of the tubing wall 1a.

In the case when the pipe for subsurface irrigation shown in Fig. 2 is employed in the subsurface irrigation method or method for supplying gas into soil of the present invention, the fluid discharged from a fluid supply source 6 flows into a header tubing 5 for use in fluid supply via a flow regulating valve 4; introduced into each porous tubing 1 from each end 3 of a plurality of porous tubings 1 aligned in a parallel manner; and then supplied into the soil via fine continuous pores p of the tubing wall 1a.

In the case when the pipe for subsurface irrigation shown in Fig. 3 is employed in the subsurface irrigation method or method for supplying gas into soil according to the present invention, after passing through a flow regulating valve 4, the fluid discharged from a fluid supply source 6 flows to header tubings 5 for use in fluid supply which are arranged at each end 2 and 3 of a plurality of porous tubings arranged in a parallel manner. This fluid is subsequently introduced into each porous tubing from both ends 2 and 3 of each of the plurality of porous tubings 1, and then supplied into the soil via fine continuous pores p of the tubing wall 1a.

As the aforementioned fluid to be supplied, liquid or gas may be used. Examples of the aforementioned liquid include irrigation water, liquid fertilizer, liquid pesticide such as soil disinfectant, soil nematocide, and the like. This liquid may take the form of water, aqueous solution, organic liquid, suspension, dispersion liquid, or the like; however, it is preferable to previously remove any type of solid suspended matter which may block the fine pores p of the porous tubing 1. When the fine pores p are blocked by the solid suspended matter, the coefficient of water permeability K is gradually reduced. However, in this case, since the porous tubing 1 is flexible, it is possible to reverse this reduction of the coefficient of water permeability to a certain extent by increasing the internal pressure.

In the subsurface irrigation method of the present invention for supplying liquid into soil, it is preferable to employ the aforementioned porous tubing 1 at a liquid supply rate of not greater than 0.5 cm$^3$/s $\cdot$ m and under a pressure, represented by water head, of not greater than 20 m. A liquid supply rate of not greater than 0.15 cm$^3$/s $\cdot$ m is more preferable. When executing the subsurface irrigation method of the present invention under the aforementioned supply conditions, the length Y of a porous tubing 1 is preferably set to within 100 m in the case when supplying liquid from one end therein. Under these aforementioned supply conditions, it is possible to supply liquid uniformly over a wide area into the layer which rest comparatively close to the surface of the soil, by means of introducing the liquid into a porous tubing 1 from one end 3 or both ends 2 and 3 of this porous tubing 1. The aforementioned conditions "at a liquid supply rate of not greater than 0.5 cm$^3$/s $\cdot$ m and under a pressure, represented by water head, of not greater than 20 m" can be simultaneously controlled and set by means of the flow regulating valve 4 inserted in between the liquid supply source 6 and the porous tubing 1. In other words, even when the liquid pressure of the liquid supply source 6 exceeds the pressure represented by a water head of 20 m, by means of regulating the supply rate of the liquid flowing into the porous tubing 1 to not greater than 0.5 cm$^3$/s $\cdot$ m using the flow regulating valve 4, the inflow amount and exudation amount of the liquid in the porous tubing 1 achieve a balance, and thus the internal pressure of the tubing does not exceed the pressure represented by a water head of 20 m.

In the case when the supply conditions are in the aforementioned ranges, the length of a porous tubing 1 allowing for uniform supply of liquid is related to the coefficient of water permeability. For example, the length of a porous tubing 1 with a coefficient of water permeability of $1.5 \times 10^{-6} \sim 1.5 \times 10^{-5}$ cm/s is preferably not greater than 30 m. In this case, the length capable of providing a uniform liquid supply is reduced; however, this is advantageous in being able to provide a sufficient supply of liquid using a comparatively low pressure and thus may be selected in accordance with the area and shape of the field.

The supply fluid is not just restricted to liquid, as gas may also be used as well. Examples of gasses which may be supplied include air, oxygen, nitrogen, carbon dioxide and the like, in addition to soil fumigants with a high volatility, such as chloropicrin, methyl bromide, aromatic halogen compounds and the like, nematocides, disinfectants, and the like. In particular, when sufficiently irrigating a field, oxygen in the soil is transpired to create an oxygen-deficient state; thus, after irrigating, it is possible to continuously supply a sufficient amount of both water and oxygen into the soil by switching the supply source 6 of the pipe for subsurface irrigation to an air supply source. In this manner, it is possible to create an ideal environment for raising crops by preventing diseases and damage such as rotting of roots from excessive wetting.

The supply flow rate of gas is preferably not greater than 7 cm$^3$/s · m. In the case when the supply flow rate of gas is within this range, the permeation resistance of the gas passing through the fine continuous pores and the dispersion rate of the gas in the soil achieve an approximate balance, thus uniform gas dispersion can be achieved over the entire length of the tubing (i.e., until the end portion therein).

When gas is made to permeate passing through the tubing wall 1a of a porous tubing 1, the coefficient of permeability of this gas becomes several tens of times greater than the aforementioned coefficient of water permeability. Consequently, on the surface, the gas immediately leaks off from the vicinity of the supply source 6; therefore, uniform movement up until the end of the tubing is not possible. However, in the soil, in particular in wet soil, the soil particles and water layer serve to form a permeation resistance. Therefore, by sufficiently pre-irrigating the surrounding soil using this porous tubing 1, water is filled into the soil, thereby increasing the permeation resistance and allowing for uniform dispersion of the gas up until the end of the porous tubing 1. In this manner, it is possible to conduct uniform supply of the gas over the entire length of the porous tubing 1 (i.e., within 50 m). Consequently, in the case when supplying gas, it is preferable to incorporate a large water content into the soil by previously passing water through the porous tubing 1, thereby wetting the fine continuous pores p of the tubing wall 1a.

In addition, by means of introducing gas into a porous tubing 1, which is buried in the soil as described above, from one end 3 or from both ends 2 and 3 therein, gas can be supplied uniformly over a wide area into the layer which rest comparatively close to the surface of the soil.

(Test Examples)

In the following, the Test Examples of the present invention will be presented.

(Test Examples 1 ~ 6)

As the pipe for subsurface irrigation, various porous tubings 1 possessing different coefficients of water permeability K, and an outer diameter and an inner diameter of 13 mm and 9 mm, respectively, were formed by bonding 80 parts of rubber powder with 20 parts of polyethylene. These porous tubings 1 were tested for their irrigation properties under the conditions explained below.

(Test Conditions)

As shown in Fig. 1, one end 2 of a porous tubing 1 was sealed, while the other end 3 was connected to a polyvinyl chloride supply duct (header tubing for use in fluid supply 5) via a flow regulating valve 4. The aforementioned polyvinyl chloride supply duct 5 was connected to a water source (supply source 6). The length of this porous tubing 1 was set to 60 m in the case of a surface installation, and set to 100 m in the case when burying the aforementioned porous tubing 1 at a depth of 30 cm under ground.

As the water source 6, water from an aqueduct was employed. The water source pressure was 2 kgf/cm$^2$; in other words, a water head of 20 m.

The flow rate was preset to 0.167 ~ 0.333 cm$^3$/s · m by means of regulation by the flow regulating valve 4.

Measurements were taken one week following the start of the operations. Using the point of connection with the flow regulating valve 4 as the origin (0 m), the local exudation amount (cm$^3$/s · m) q and the local internal pressure (water head cm) h were measured every 10 m from this aforementioned origin. The results of these measurements are shown along with the coefficients of water permeability (initial values K) and the preset flow rate (cm$^3$/s · m) which were measured separately, are shown together in Tables 1 and 2.

From these aforementioned results, with regard to the pipes for subsurface irrigation of Test Examples 1 ~ 6 possessing coefficients of water permeability K of $4.6 \times 10^{-7}$ ~ $1.5 \times 10^{-5}$ cm/s, in the case of a surface installation, the local exudation amount q and local internal pressure h were largely reduced with increasing distance from the origin. However, when burying these pipes in the soil, it was confirmed that the reduction in the local exudation amount q and local internal pressure h were insignificant, regardless of distance from the origin, over the entire length of 100 m. In this manner, it was confirmed that the pipes for subsurface irrigation described above, when placed in the soil, were able to disperse and supply to the soil a uniform amount of water from the origin to the far end.

The same results were obtained in the case when using liquid fertilizer, liquid soil disinfectant, and liquid soil nematocide.

Table 1

| Experimental Example | 1 | | 2 | | 3 | |
|---|---|---|---|---|---|---|
| Coefficient of water permeability (initial value) (cm/s) | $1.0\times10^{-5}$ | | $1.5\times10^{-5}$ | | $2.0\times10^{-6}$ | |
| Preset flow rate (cm$^3$/s・m) | 0.167 | | 0.333 | | 0.167 | |
| Surface setting | q | h | q | h | q | h |
| 0 m from origin | 1.15 | 35 | 1.37 | 46 | 0.40 | 123 |
| 30 m from origin | 0.05 | 2 | 0.13 | 4 | 0.13 | 43 |
| 60 m from origin | 0 | 0 | 0.02 | 1 | 0.10 | 33 |
| Underground setting (burial depth = 30 cm) | q | h | q | h | q | h |
| 0 m from origin | 0.20 | 31 | 0.38 | 83 | 0.18 | 60 |
| 30 m from origin | 0.17 | 30 | 0.32 | 56 | 0.17 | 57 |
| 60 m from origin | 0.15 | 27 | 0.30 | 52 | 0.13 | 43 |
| 100 m from origin | 0.13 | 22 | 0.31 | 50 | 0.15 | 50 |

q: Local exudation amount (cm$^3$/s・m)
h: Local internal pressure (water head cm)

Table 2

| Experimental Example | 4 | | 5 | | 6 | |
|---|---|---|---|---|---|---|
| Coefficient of water permeability (initial value) (cm/s) | $1.8\times10^{-6}$ | | $4.8\times10^{-7}$ | | $4.6\times10^{-7}$ | |
| Preset flow rate (cm$^3$/s・m) | 0.333 | | 0.167 | | 0.333 | |
| Surface setting | q | h | q | h | q | h |
| 0 m from origin | 0.53 | 170 | 0.23 | 302 | 0.38 | 498 |
| 30 m from origin | 0.30 | 105 | 0.18 | 240 | 0.20 | 263 |
| 60 m from origin | 0.21 | 73 | 0.14 | 183 | 0.16 | 210 |
| Underground setting (burial depth = 30 cm) | q | h | q | h | q | h |
| 0 m from origin | 0.37 | 119 | 0.17 | 227 | 0.33 | 440 |
| 30 m from origin | 0.33 | 110 | 0.16 | 213 | 0.38 | 426 |
| 60 m from origin | 0.32 | 105 | 0.15 | 200 | 0.33 | 441 |
| 100 m from origin | 0.32 | 107 | 0.15 | 195 | 0.35 | 430 |

q: Local exudation amount (cm$^3$/s・m)
h: Local internal pressure (water head cm)

(Test Examples 7 ~ 10)

Pipes for subsurface irrigation possessing different coefficients of water permeability were manufactured in the same manner as in the aforementioned test examples 1 ~ 6 using porous tubings 1 with the exception that the inner diameter of each tubing was 9.5 mm. A gas dispersion test was then conducted on each pipe under the following conditions.

(Test Conditions)

As shown in Fig. 1, one end 2 of a porous tubing 1 was sealed, and the other end 3 was connected to a duct made of polyvinyl chloride (header tubing 5 for use in fluid supply) via a flow regulating valve 4. This duct 5 was connected to a gas source (supply source 6).

The length of the porous tubing 1 was 50 m, both in the case of a surface installation and in the case of burying the aforementioned porous tubing 1 in the earth at a depth of 30 cm.

A carbon dioxide gas cylinder was used as the gas source 6. The flow rate of carbon dioxide gas was preset to 2.2 ~ 6.6 cm$^3$/s • m by means of regulation using the flow regulating valve 4.

Measurements were taken one week following the start of the operations using the connection point with the flow regulating valve 4 as the origin (0 m), the local permeation amount (cm$^3$/s • m) q and local internal pressure (water head cm) h were measured from this origin every 5 m. These measured results along with separately measured coefficients of permeation (initial value) K and preset flow rate (cm$^3$/s • m) are shown together in Tables 3 and 4.

As shown by the results of Tables 3 and 4, the porous tubings of Test Examples 1 ~ 4 possessing coefficients of water permeability of $1.0 \times 10^{-8}$ ~ $1.0 \times 10^{-5}$ cm/s displayed drastic reductions in the local permeation amount q and local internal pressure h with increasing distance from the origin in the case of surface installation. However, the same porous tubings displayed only slight reduction in the local permeation amount q and local internal pressure h regardless of the distance from the origin over the entire length of 50 m in the case when these tubings were buried in the soil. These results indicate that the porous tubings buried in the soil were able to supply a uniform amount of carbon dioxide gas into the soil from the origin to the far end therein.

The same results were obtained in the case when using air and the like in place of carbon dioxide gas.

Table 3

| Experimental Example | | | 7 | | 8 | |
|---|---|---|---|---|---|---|
| Coefficient of water permeability (initial value) (cm/s) | | | $4.6 \times 10^{-7}$ | | $4.6 \times 10^{-7}$ | |
| Preset flow rate (cm$^3$/s • m) | | | 2.2 | | 6.6 | |
| Surface setting | | | q | h | q | h |
| 0 m from origin | | | 3.3 | 43 | 9.0 | 176 |
| 30 m from origin | | | 1.7 | 23 | 6.3 | 86 |
| 50 m from origin | | | 1.7 | 19 | 5.7 | 79 |
| Underground setting (burial depth = 30 cm) | | | q | h | q | h |
| 0 m from origin | | | 2.5 | 51 | 7.0 | 180 |
| 30 m from origin | | | 2.2 | 43 | 6.3 | 173 |
| 50 m from origin | | | 2.4 | 42 | 6.2 | 150 |
| q: Local permeation amount (cm$^3$/s • m)  h: Local internal pressure (water head cm) | | | | | | |

Table 4

| Experimental Example | | 9 | | 10 | |
|---|---|---|---|---|---|
| Coefficient of water permeability (initial value) (cm/s) | | $1.0 \times 10^{-5}$ | | $1.0 \times 10^{-8}$ | |
| Preset flow rate (cm$^3$/s·m) | | 7.0 | | 7.0 | |
| Surface setting | | q | h | q | h |
| 0 m from origin | | 10.0 | 4.3 | 7.3 | 1980 |
| 30 m from origin | | 1.7 | 0.7 | 6.9 | 1871 |
| 50 m from origin | | 0 | 0 | 5.3 | 1434 |
| Underground setting (burial depth = 30 cm) | | q | h | q | h |
| 0 m from origin | | 8.6 | 10 | 7.2 | 2202 |
| 30 m from origin | | 6.5 | 8 | 6.9 | 2130 |
| 50 m from origin | | 6.3 | 8 | 6.5 | 1986 |
| q: Local permeation amount (cm$^3$/s·m) h: Local internal pressure (water head cm) | | | | | |

**Claims**

1. A pipe for subsurface irrigation comprising a flexible, porous tubing possessing a coefficient of water permeability of $1.0 \times 10^{-8} \sim 1.5 \times 10^{-5}$ cm/s.

2. A pipe for subsurface irrigation as recited in claim 1, possessing an inner diameter of $7 \sim 20$ mm.

3. A pipe for subsurface irrigation as recited in claim 1, possessing a thickness of $1.5 \sim 3$ mm.

4. A pipe for subsurface irrigation as recited in claim 2, possessing a thickness of $1.5 \sim 3$ mm.

5. A subsurface irrigation method comprising the steps of: burying a flexible, porous tubing possessing a coefficient of water permeability of $4.5 \times 10^{-7} \sim 1.5 \times 10^{-5}$ cm/s in soil; and supplying liquid into the soil by means of the porous tubing under conditions of a liquid supply rate of not greater than 0.5 cm$^3$/s·m and a pressure, represented by water head, of not greater than 20 m.

6. A subsurface irrigation method as recited in claim 5, wherein a flow regulating valve is used whereby the conditions of the liquid supply rate of not greater than 0.5 cm$^3$/s·m and the pressure, represented by water head, of not greater than 20 m are satisfied.

7. A subsurface irrigation method as recited in claim 5, wherein in the step of supplying the liquid into the soil, the liquid is supplied from one end of the porous tubing possessing a longitudinal extended length of not greater than 100 m.

8. A subsurface irrigation method as recited in claim 6, wherein in the step of supplying the liquid into the soil, the liquid is supplied from one end of the porous tubing possessing a longitudinal extended length of not greater than 100 m.

9. A subsurface irrigation method as recited in claim 5, wherein in the step of supplying the liquid into the soil, the liquid is supplied from both ends of the porous tubing possessing a longitudinal extended length of not greater than 200 m.

10. A subsurface irrigation method as recited in claim 6, wherein in the step of supplying the liquid into the soil, the liquid is supplied from both ends of the porous tubing possessing a longitudinal extended length of not greater than 200 m.

11. A method for supplying gas into soil comprising the steps of:

burying a flexible, porous tubing possessing a coefficient of water permeability of $1.0 \times 10^{-8} \sim 1.0 \times 10^{-5}$ cm/s in soil; and

supplying gas into the soil by means of the porous tubing.

12. A method for supplying gas into the soil as recited in claim 11, further comprising the step of supplying water from the porous tubing to soil surrounding the porous tubing, before the step of supplying the gas into the soil.

13. A method for supplying gas into the soil as recited in claim 11, wherein in the step of supplying the gas into the soil, a supply flow rate of the gas is set at not greater than $7 \ \text{cm}^3/\text{s} \cdot \text{m}$.

14. A method for supplying gas into the soil as recited in claim 12, wherein in the step of supplying the gas into the soil, a supply flow rate of the gas is set at not greater than $7 \ \text{cm}^3/\text{s} \cdot \text{m}$.

15. A method for supplying gas into the soil as recited in claim 11, wherein in the step of supplying the gas into the soil, the gas is supplied from one end of the porous tubing possessing a longitudinal extended length of not greater than 50 m.

16. A method for supplying gas into the soil as recited in claim 12, wherein in the step of supplying the gas into the soil, the gas is supplied from one end of the porous tubing possessing a longitudinal extended length of not greater than 50 m.

17. A method for supplying gas into the soil as recited in claim 13, wherein in the step of supplying the gas into the soil, the gas is supplied from one end of the porous tubing possessing a longitudinal extended length of not greater than 50 m.

18. A method for supplying gas into the soil as recited in claim 14, wherein in the step of supplying the gas into the soil, the gas is supplied from one end of the porous tubing possessing a longitudinal extended length of not greater than 50 m.

19. A method for supplying gas into the soil as recited in claim 11, wherein in the step of supplying the gas into the soil, the gas is supplied from both ends of the porous tubing possessing a longitudinal extended length of not greater than 100 m.

20. A method for supplying gas into the soil as recited in claim 12, wherein in the step of supplying the gas into the soil, the gas is supplied from both ends of the porous tubing possessing a longitudinal extended length of not greater than 100 m.

21. A method for supplying gas into the soil as recited in claim 13, wherein in the step of supplying the gas into the soil, the gas is supplied from both ends of the porous tubing possessing a longitudinal extended length of not greater than 100 m.

22. A method for supplying gas into the soil as recited in claim 14, wherein in the step of supplying the gas into the soil, the gas is supplied from both ends of the porous tubing possessing a longitudinal extended length of not greater than 100 m.

**Patentansprüche**

1. Rohr zur unterirdischen Bewässerung, welches ein flexibles, poröses Rohrmaterial mit einem Wasserdurchlässigkeitskoeffizienten von $1.0 \times 10^{-8} - 1.5 \times 10^{-5}$ cm umfaßt.

2. Rohr zur unterirdischen Bewässerung gemäß Anspruch 1, **gekennzeichnet durch** einen Innendurchmesser von 7 - 20 mm.

3. Rohr zur unterirdischen Bewässerung gemäß Anspruch 1, **gekennzeichnet durch** eine Wandstärke von 1,5 bis 3 mm.

**4.** Rohr zur unterirdischen Bewässerung gemäß Anspruch 2, **gekennzeichnet durch** eine Wandstärke von 1,5 bis 3 mm.

**5.** Verfahren zur unterirdischen Bewässerung, folgende Schritte umfassend:

- Vergraben einer flexiblen, porösen Rohrleitung mit einem Wasserdurchlässigkeitskoeffizienten von $4,5 \times 10^{-7}$ - $1.5 \times 10^{-5}$ cm/s im Erdboden; und
- Einführung von Flüssigkeit in den Erdboden mittels der porösen Rohrleitung, wobei die Flüssigkeit mit einer Geschwindigkeit von nicht mehr als 0,5 cm$^3$/s · m und einem Druck von nicht mehr als 20 m Wassersäule eingespeist wird.

**6.** Verfahren zur unterirdischen Bewässerung gemäß Anspruch 5, worin ein Durchflußregelventil verwendet wird, und wobei die Bedingungen der Flüssigkeitseinspeisegeschwindigkeit von nicht mehr als 0,15 cm$^3$/s · m und des Druckes von nicht mehr als 20 m Wassersäule erfüllt werden.

**7.** Verfahren zur unterirdischen Bewässerung gemäß Anspruch 5, wobei zur Einführung der Flüssigkeit in den Erdboden die Flüssigkeit an einem Ende der porösen Rohrleitung mit einer Längenausdehnung von nicht mehr als 100 m eingespeist wird.

**8.** Verfahren zur unterirdischen Bewässerung gemäß Anspruch 6, wobei zur Einführung der Flüssigkeit in den Erdboden die Flüssigkeit an einem Ende der porösen Rohrleitung mit einer Längenausdehnung von nicht mehr als 100 m eingespeist wird.

**9.** Verfahren zur unterirdischen Bewässerung gemäß Anspruch 5, wobei zur Einführung der Flüssigkeit in den Erdboden die Flüssigkeit an beiden Enden der porösen Rohrleitung mit einer Längenausdehnung von nicht mehr als 200 m eingespeist wird.

**10.** Verfahren zur unterirdischen Bewässerung gemäß Anspruch 6, wobei zur Einführung der Flüssigkeit in den Erdboden die Flüssigkeit an beiden Enden der porösen Rohrleitung mit einer Längenausdehnung von nicht mehr als 200 m eingespeist wird.

**11.** Verfahren zur Einführung von Gas in den Erdboden, folgende Schritte umfassend:

- Vergraben einer flexiblen, porösen Rohrleitung mit einem Wasserdurchlässigkeitskoeffizienten von $1.0 \times 10^{-8}$ ~ $1.0 \times 10^{-5}$ cm/s in den Erdboden; und
- Einführung von Gas in den Erdboden mittels der porösen Rohrleitung.

**12.** Verfahren zur Einführung von Gas in den Erdboden gemäß Anspruch 11, welches vor der Einführung von Gas in den Erdboden zusätzlich einen Schritt zur Einführung von Wasser durch die poröse Rohrleitung in den Erdboden, welcher die poröse Rohrleitung umgibt, umfaßt.

**13.** Verfahren zur Einführung von Gas in den Erdboden gemäß Anspruch 11, worin bei der Einführung des Gases in den Erdboden zur Einführung eine Flußgeschwindigkeit des Gases von nicht mehr als 7 cm$^3$/s · m gewählt wird.

**14.** Verfahren zur Einführung von Gas in den Erdboden gemäß Anspruch 12, worin bei der Einführung des Gases in den Erdboden zur Einführung eine Flußgeschwindigkeit des Gases von nicht mehr als 7 cm$^3$/s · m gewählt wird.

**15.** Verfahren zur Einführung von Gas in den Erdboden gemäß Anspruch 11, worin bei der Einführung des Gases in den Erdboden das Gas an einem Ende der porösen Rohrleitung mit einer Längenausdehnung von nicht mehr als 50 m eingespeist wird.

**16.** Verfahren zur Einführung von Gas in den Erdboden gemäß Anspruch 12, worin bei der Einführung des Gases in den Erdboden das Gas an einem Ende der porösen Rohrleitung mit einer Längenausdehnung von nicht mehr als 50 m eingespeist wird.

**17.** Verfahren zur Einführung von Gas in den Erdboden gemäß Anspruch 13, worin bei der Einführung des Gases in den Erdboden das Gas an einem Ende der porösen Rohrleitung mit einer Längenausdehnung von nicht mehr als 50 m eingespeist wird.

18. Verfahren zur Einführung von Gas in den Erdboden gemäß Anspruch 14, worin bei der Einführung des Gases in den Erdboden das Gas an einem Ende der porösen Rohrleitung mit einer Längenausdehnung von nicht mehr als 50 m eingespeist wird.

19. Verfahren zur Einführung von Gas in den Erdboden gemäß Anspruch 11, worin bei der Einführung des Gases in den Erdboden das Gas an beiden Enden der porösen Rohrleitung mit einer Längenausdehnung von nicht mehr als 100 m eingespeist wird.

20. Verfahren zur Einführung von Gas in den Erdboden gemäß Anspruch 12, worin bei der Einführung des Gases in den Erdboden das Gas an beiden Enden der porösen Rohrleitung mit einer Längenausdehnung von nicht mehr als 100 m eingespeist wird.

21. Verfahren zur Einführung von Gas in den Erdboden gemäß Anspruch 13, worin bei der Einführung des Gases in den Erdboden das Gas an beiden Enden der porösen Rohrleitung mit einer Längenausdehnung von nicht mehr als 100 m eingespeist wird.

22. Verfahren zur Einführung von Gas in den Erdboden gemäß Anspruch 14, worin bei der Einführung des Gases in den Erdboden das Gas an beiden Enden der porösen Rohrleitung mit einer Längenausdehnung von nicht mehr als 100 m eingespeist wird.

**Revendications**

1. Tuyau d'irrigation enterrée comportant une conduite poreuse souple ayant un coefficient de perméabilité à l'eau de $1,0 \times 10^{-8}$ à $1,0 \times 10^{-5}$ cm/s.

2. Conduit d'irrigation enterrée selon la revendication 1, ayant un diamètre intérieur de 7 à 20 mm.

3. Conduit d'irrigation enterrée selon la revendication 1, ayant une épaisseur de 1,5 à 3 mm.

4. Conduit d'irrigation enterrée selon la revendication 2, ayant une épaisseur de 1,5 à 3 mm.

5. Procédé d'irrigation enterrée comportant les étapes consistant à :

    enterrer dans un sol un conduite poreuse souple ayant un coefficient de perméabilité à l'eau de $4,5 \times 10^{-7}$ à $1,5 \times 10^{-5}$ cm/s, et
    envoyer du liquide dans le sol par l'intermédiaire de la conduite poreuse dans des conditions constituées d'un débit de liquide pas plus grand que 0,5 cm$^3$/s $\cdot$ m et d'une pression, représentée par une colonne d'eau, pas plus grande que 20 m.

6. Procédé d'irrigation enterrée selon la revendication 5, dans lequel une vanne de régulation d'écoulement est utilisée de sorte que les conditions constituées du fait que le débit de liquide ne soit pas plus grand que 0,5 cm$^3$/s $\cdot$ m et que la pression, représentée par la colonne d'eau, ne soit pas plus grande que 20 m, sont satisfaites.

7. Procédé d'irrigation enterrée selon la revendication 5, dans lequel dans l'étape consistant à envoyer le liquide dans le sol, le liquide est envoyé depuis une première extrémité de la conduite poreuse qui a une longueur étendue longitudinale qui n'est pas plus grande que 100 m.

8. Procédé d'irrigation enterrée selon la revendication 6, dans lequel dans l'étape consistant à envoyer le liquide dans le sol, le liquide est envoyé depuis une première extrémité de la conduite poreuse qui a une longueur étendue longitudinale qui n'est pas plus grande que 100 m.

9. Procédé d'irrigation enterrée selon la revendication 5, dans lequel dans l'étape consistant à envoyer le liquide dans le sol, le liquide est envoyé à partir des deux extrémités de la conduite poreuse qui a une longueur étendue longitudinale qui n'est pas plus grande que 200 m.

10. Procédé d'irrigation enterrée selon la revendication 6, dans lequel dans l'étape consistant à envoyer le liquide dans le sol, le liquide est envoyé à partir des deux extrémités de la conduite poreuse qui a une longueur étendue longitudinale qui n'est pas plus grande que 200 m.

11. Procédé pour envoyer du gaz dans un sol, comportant les étapes consistant à :

enterrer dans le sol une conduite poreuse souple qui a un coefficient de perméabilité à l'eau de $1,0 \times 10^{-8}$ à $1,0 \times 10^{-5}$ cm/s, et
envoyer du gaz dans le sol par l'intermédiaire de la conduite poreuse.

12. Procédé pour envoyer du gaz dans un sol selon la revendication 11, comportant de plus l'étape consistant à envoyer de l'eau depuis la conduite poreuse dans le sol entourant la conduite poreuse, avant l'étape consistant à envoyer le gaz dans le sol.

13. Procédé pour envoyer du gaz dans un sol selon la revendication 11, dans lequel dans l'étape consistant à envoyer le gaz dans le sol, le débit d'alimentation en gaz est établi pour ne pas être plus grand que 7 cm$^3$/s $\cdot$ m.

14. Procédé pour envoyer du gaz dans un sol selon la revendication 12, dans lequel dans l'étape consistant à envoyer le gaz dans le sol, le débit d'alimentation en gaz est établi pour ne pas être plus grand que 7 cm$^3$/s $\cdot$ m.

15. Procédé pour envoyer du gaz dans un sol selon la revendication 11, dans lequel dans l'étape consistant à envoyer le gaz dans le sol, le gaz est envoyé à partir d'une extrémité de la conduite poreuse qui a une longueur longitudinale étendue qui n'est pas plus grande que 50 m.

16. Procédé pour envoyer du gaz dans un sol selon la revendication 12, dans lequel dans l'étape consistant à envoyer le gaz dans le sol, le gaz est envoyé à partir d'une extrémité de la conduite poreuse qui a une longueur longitudinale étendue qui n'est pas plus grande que 50 m.

17. Procédé pour envoyer du gaz dans un sol selon la revendication 13, dans lequel dans l'étape consistant à envoyer le gaz dans le sol, le gaz est envoyé à partir d'une extrémité de la conduite poreuse qui a une longueur longitudinale étendue qui n'est pas plus grande que 50 m.

18. Procédé pour envoyer du gaz dans un sol selon la revendication 14, dans lequel dans l'étape consistant à envoyer le gaz dans le sol, le gaz est envoyé à partir d'une extrémité de la conduite poreuse qui a une longueur longitudinale étendue qui n'est pas plus grande que 50 m.

19. Procédé pour envoyer du gaz dans un sol selon la revendication 11, dans lequel dans l'étape consistant à envoyer le gaz dans le sol, le gaz est envoyé à partir des deux extrémités de la conduite poreuse qui a une longueur longitudinale étendue qui n'est pas plus grande que 100 m.

20. Procédé pour envoyer du gaz dans un sol selon la revendication 12, dans lequel dans l'étape consistant à envoyer le gaz dans le sol, le gaz est envoyé à partir des deux extrémités de la conduite poreuse qui a une longueur longitudinale étendue qui n'est pas plus grande que 100 m.

21. Procédé pour envoyer du gaz dans un sol selon la revendication 13, dans lequel dans l'étape consistant à envoyer le gaz dans le sol, le gaz est envoyé à partir des deux extrémités de la conduite poreuse qui a une longueur longitudinale étendue qui n'est pas plus grande que 100 m.

22. Procédé pour envoyer du gaz dans un sol selon la revendication 14, dans lequel dans l'étape consistant à envoyer le gaz dans le sol, le gaz est envoyé à partir des deux extrémités de la conduite poreuse qui a une longueur longitudinale étendue qui n'est pas plus grande que 100 m.

EP 0 683 973 B1

FIG.1

FIG.2

FIG.3

16